# EUROPEAN PATENT APPLICATION

(11) **EP 4 277 098 A1**
(43) Date of publication of application: **15.11.2023**
(21) Application number: 23173341.1
(22) Date of filing: 15.05.2023
(51) Int. Cl.: H02K 15/06, H02K 15/095

(54) **SEGMENTED ROTORS HAVING RECTANGULAR WIRES AND METHODS OF MANUFACTURE THEREFOR**

(30) Priority: 14.05.2022 US 202217744667
(71) Applicant: Hamilton Sundstrand Corporation, Charlotte, NC 28217-4578 (US)
(72) Inventor: RIPPLINGER, Skyler, Rockford, Illinois, 61114 (US); KOENIG, Andreas C., Machesney Park, 61115 (US)
(74) Representative: Dehns

(57) **Abstract**

In accordance with at least one aspect of this disclosure, a method includes winding a rectangular wire to form an aperture in a winding configured to surround a rotor segment, inserting the rotor segment into the aperture of the winding, and installing the rotor segment into a rotor body. The method further includes, repeating winding, inserting, and installing for a predetermined number of rotor segments and rectangular wires.

## Description

### TECHNICAL FIELD

The present disclosure relates to segmented rotors, and more particularly to methods for manufacturing segmented rotors having rectangular wires.

### BACKGROUND

Typically, assembly of a rectangular wire rotor requires winding the coils before placing them on the rotor poles. The pre-wound coils must then be, at least partially, unwound in order to be installed onto the rotor poles. In doing so, this may cause distortion (e.g., mangling) of the rectangular wire coils when the coils are placed over the pole tips in a "slinky" type fashion. If the coils are distorted by this process, it may not be possible to return the coils to their perfectly flat state, which can impact slot fill ability. Additionally, using traditional assembly methods, pole tip geometry is limited in order to easier allow coil assembly and less distortion.

When using rectangular or flat wire coils, there must be some clearance to the rotor pole core, but this can require secondary methods in order to take up that space. Accordingly, the assembly labor time for conventional rotor assembly methods can be very time consuming and can lead to errors, or to insulation shifting out of proper position during long assembly steps.

There remains a need in the art for improved methods for winding and assembling rotors and a need for rectangular wire rotors having superior properties compared to those assembled in traditional manners. This disclosure provides a solution for this need.

### SUMMARY

In accordance with at least one aspect of this disclosure, a method includes winding a rectangular wire to form an aperture in a winding configured to surround a rotor segment, inserting the rotor segment into the aperture of the winding, and installing the rotor segment into a rotor body. The method further includes, repeating winding, inserting, and installing for a predetermined number of rotor segments and rectangular wires.

In embodiments, inserting the rotor segment into the aperture of the winding can include sliding the rotor segment into the aperture of the winding. In embodiments, sliding can include sliding the rotor segment into the aperture joint end first. In embodiments, installing the rotor segment into a rotor body can include joining the rotor segment to the rotor body at the joint end. In certain embodiments, joining can include inserting the joint end of the rotor segment into a joint aperture of the rotor body and sliding the rotor segment along an axis of the rotor body. The method can also include securing the rotor segment to the rotor body. In embodiments, securing can include one or more of laser welding, adhering, and/or press fitting the rotor segment to the rotor body.

In accordance with at least one aspect of this disclosure, a method can include winding a rectangular wire around a rotor segment (e.g., directly around the rotor segment) and installing the rotor segment into a rotor body. The method can further include repeating the winding and installing for a predetermined number of rotor segments and rectangular wires. In embodiments, winding can include winding the rectangular wire around the rotor segment such that there is no clearance between the rotor segment and the rectangular wire.

In accordance with at least one aspect of this disclosure, a rotor can include a rotor yoke hub, a rotor pole operatively connected to a rotor yoke hub, and a rectangular wire wound around a body of the rotor pole such that there is no clearance between the rectangular wire and the rotor pole body and/or such that there is no clearance between layers of the winding. In embodiments, the rotor pole can be joined to the rotor yoke hub via a dove tail joint or a fir tree joint.

In embodiments, the rotor can be formed by any process provided in the methods described above, or any suitable combination thereof. In embodiments, the rotor can be formed by the process of winding a rectangular wire to fit around the pole and installing the rotor pole into the rotor yoke hub via a joint.

In certain embodiments, the process can include winding the rectangular wire to form an aperture and the process further comprising inserting the rotor pole into the aperture. In certain embodiments, winding can include winding the rectangular wire directly onto the rotor pole. In embodiments, the process can be repeated for a predetermined number of rotor poles. In embodiments, the process can include securing the joint via one or more of laser welding, adhering, or press fitting the rotor pole into the rotor yoke hub.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a perspective view of a rotor in accordance with this disclosure, showing a rotor mounted on a shaft;
Fig. 2 is an axial view of an embodiment of the rotor of Fig 1, showing rotor segments operatively connected to a rotor yoke hub;
Fig. 3 is an axial view of an embodiment of the rotor of Fig 1, showing rotor segments operatively connected to a rotor yoke hub;
Fig. 4 is a perspective view of a rectangular wire coil configured to fit around a rotor segment of the rotor of Fig. 1, showing a portion of a method for assembling the rotor;
Fig. 5 is a schematic axial view of a rotor segment, showing another portion of the method of Fig. 4;
Fig. 6 is a perspective view of the rotor segment of Fig. 5, showing another portion of the method of Fig. 4;
Fig. 7 is a schematic axial view of a rotor segment, showing a portion of another method for assembling the rotor; and
Fig. 8 is a perspective view of the rotor segment of Fig. 7, showing another portion of the method of Fig. 7.

### DETAILED DESCRIPTION

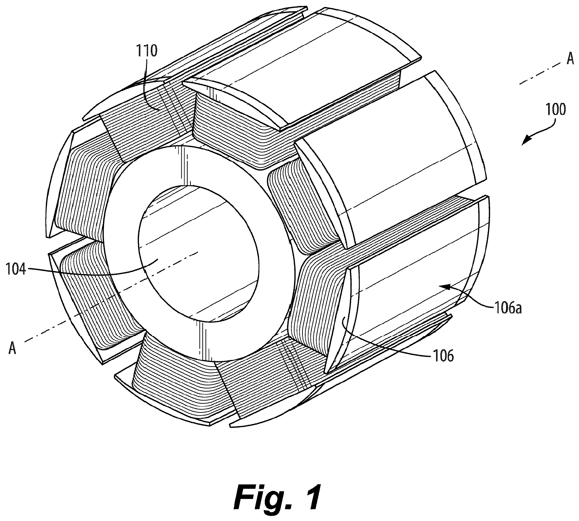

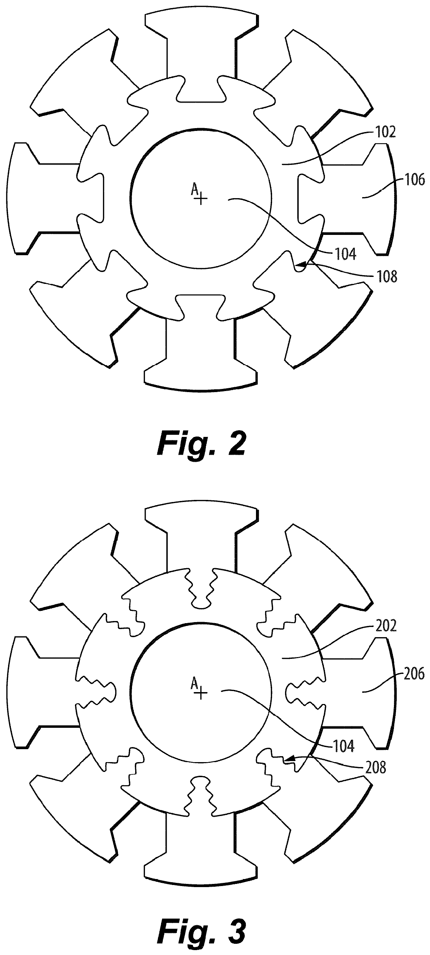

Reference will now be made to the drawings wherein like reference numerals identify similar structural features or aspects of the subject disclosure. For purposes of explanation and illustration, and not limitation, an illustrative view of an embodiment of a rotor in accordance with the disclosure is shown in Fig. 1 and is designated generally by reference character 100. Other embodiments and/or aspects of this disclosure are shown in Figs. 2-8.

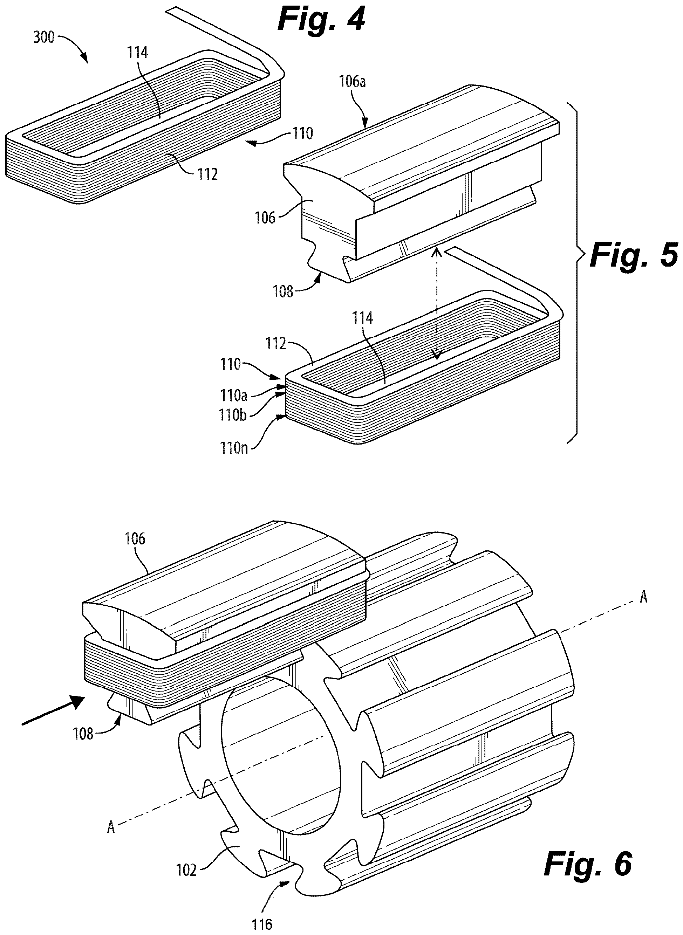

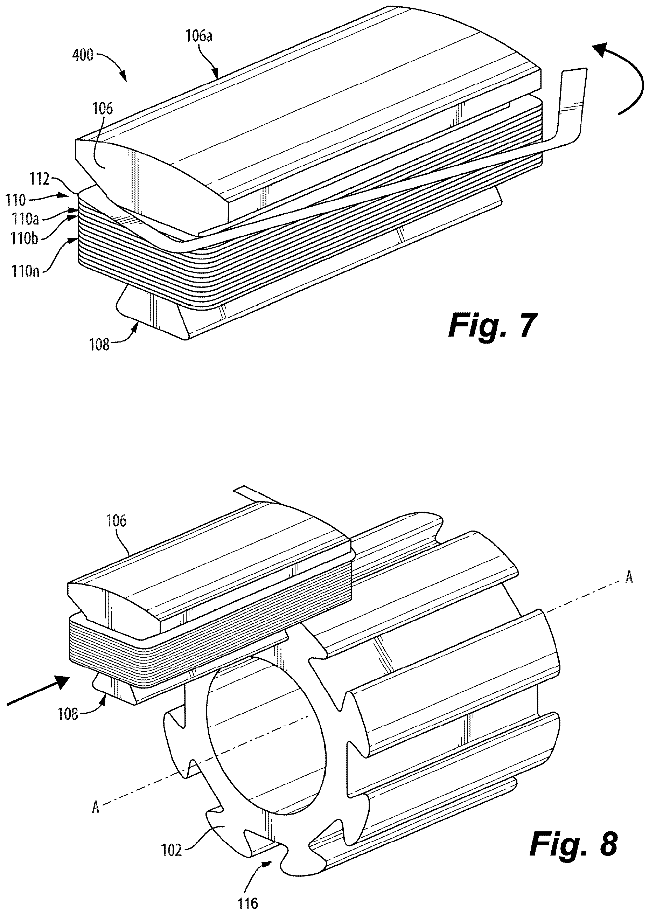

As shown in Figs. 1-2, in accordance with at least one aspect of this disclosure, a rotor 100 can include a rotor yoke hub 102 having a central bore 104 configured to accept a rotor shaft, and at least one rotor pole 106 operatively connected to a rotor yoke hub 102 via a joint 108. A rectangular (e.g., a flat) wire 110 can be wound around a body of the rotor pole 106 such that there is no clearance between the rectangular wire 110 and the rotor pole body 106. This can be more clearly seen in Figs. 5 and 7 for example. Additionally, in embodiments, the rectangular wire 110 can be wound around the body of the rotor pole 106 such that there is no clearance between layers of the winding (e.g., as is more clearly seen in Figs. 5 and 7). The rotor 100 can be or include a segmented rotor (e.g., as shown), where each rotor segment (rotor pole) 106 is operatively connected to the rotor yoke hub 102 at a respective joint 108.

In certain embodiments, such as shown in Fig. 2, the joint can include a dove tail joint 108. In certain embodiments such as shown in Fig. 3, for example in high speed rotors, the joint can include a fir tree joint 208 for added strength and configured to withstand higher rpm. The rotor 100 described herein can perform better than traditionally wound rectangular wire rotors and can be assembled faster and simpler than when using conventional techniques. For example, the assembled rotor 100 can have little to no coil distortion, the rotor 100 may not be limited to certain pole tip geometry or sizes, and embodiments of the rotor 100 can allow for simpler pole insulation winding. In embodiments, the rotor 100 can be formed by any process provided in the methods described hereinbelow, or any suitable combination thereof.

Referring now to Figs. 1-6, and in particular Figs. 4-6, in accordance with at least one aspect of this disclosure, a method 300 of winding and assembling the rotor 100 includes winding a rectangular wire 110 to form a coil or winding 112 having an aperture 114 therein. The winding 112 can be wound to any particular shape configured to surround a rotor segment 106 of a given rotor. As shown in Fig. 5, the method 300 can then include inserting the rotor segment 106 into the aperture 114 of the winding 112. This can be done by sliding the rotor segment into the aperture 114 joint end first so that the winding 112 surrounds the rotor segment 106 with little to no clearance between the wire 110 and the rotor segment 106, and/or little to no clearance between the layers 110a, 110b... 110n, of the wire 110. Alternatively, the wire 110 can be slid onto the rotor segment 106 starting at the joint end and sliding upwards to meet at top 106a of the rotor segment 106 (e.g., as indicated by the double headed arrow in Fig. 5), however the end result is the same for both. Assembling the rotor pole in the manner as described for method 300 does not require the wire coil 112 to be uncoiled to fit around the geometry of the top 106a of the rotor segment 106, which is typically larger than the aperture 114 of the coil 112.

Once the rotor segment 106 and the winding 112 are fitted together, the rotor segment 106 can then be installed into the rotor body, e.g., the yoke hub 102, by sliding the joint end 108 of the rotor segment axially (e.g., along axis A of the rotor 100) into a joint aperture 116 of the rotor body 102. Although Figs. 1-6 show a rotor 100 where the rotor yoke hub 102 includes the joint aperture 116 and the rotor segment 106 includes a male joint end 108, it should be understood by those having ordinary skill in the art that any suitable joinery (e.g., male/female connections) is contemplated herein, for example where the rotor yoke hub 102 includes the male end and the rotor segment 106 includes the female end. Assembly of the rotor 100 can continue in this manner, repeating winding, inserting, and installing for a predetermined number of rotor segments 106 and rectangular wires 110, until all segments 106 have been installed on the hub 102.

Once all rotor segments 106 have been installed, or after each segment has been installed, the method 300 can include securing the rotor segment 106 to the rotor body 102, for example by one or more of laser welding, adhering, and/or press fitting the rotor segment 106 to the rotor body 102.

In accordance with at least one aspect of this disclosure, as shown in Figs. 1-3, 7, and 8, another method 400 can be employed to wind and assemble the rotor 100. The method 400 can have similar components and/or features with respect to method 300. For brevity, the description of common elements that have been described above for method 300 are not repeated with respect to method 400 as shown in Figs. 1-3, 7, and 8. In method 400, the method 400 can include winding the rectangular wire 110 directly around the rotor segment 106. The method 400 can then follow the same, or a similar process of method 300, as shown in Fig. 8 for example. Here, because the wire 110 is wound directly into the rotor segment 106, there is less opportunity for the rectangular wire 110 to become distorted. Therefore, when using method 400 to wind and assemble the rotor 100, there should be no clearance between the rotor segment 106 and the rectangular wire 110, or between layers of the wire 110a, 110b... 110n.

Embodiments include a rectangular wire segmented rotor where each pole can be an independently stacked core. Embodiments of the method can include assembling the rectangular wire coils to poles via a simple sliding motion or winding the rectangular wire directly on each pole (e.g., bobbin style). Embodiments allow for the coils to be wound on the pole with slight tension and clearance. Embodiments of the method can include assembling the wound or insulated pole segments to the yoke hub via an axial sliding motion, for example. In embodiments, connecting segments to the hub can be done by laser weld, adhesives, or press fit only. For high dynamic loads on high speed rotors, which may experience higher stress at the segmented joint, embodiments can include a fir tree joint.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the apparatus and methods of the subject disclosure have been shown and described, those skilled in the art will readily appreciate that changes and/or modifications may be made thereto without departing from the scope of the subject disclosure.

## Claims

1. A method, comprising:
winding a rectangular wire (110) to form an aperture (114) in a winding (112) configured to surround a rotor segment (106);
inserting the rotor segment into the aperture of the winding; and
installing the rotor segment into a rotor body (102).

2. The method of claim 1, further comprising:
repeating winding, inserting, and installing for a predetermined number of rotor segments (106) and rectangular wires (110).

3. The method of claim 1 or 2, wherein inserting the rotor segment (106) into the aperture (114) of the winding includes sliding the rotor segment into the aperture of the winding; optionally
wherein sliding includes sliding the rotor segment (106) into the aperture joint end first.

4. The method of any preceding claim, wherein installing the rotor segment (106) into a rotor body (102) includes joining the rotor segment to the rotor body (102) at the joint end, optionally
wherein joining includes inserting the joint end of the rotor segment into a joint aperture of the rotor body and sliding the rotor segment along an axis of the rotor body.

5. The method of any preceding claim, further comprising securing the rotor segment (106) to the rotor body (102).

6. The method of claim 5, wherein securing includes one or more of laser welding, adhering, and/or press fitting the rotor segment to the rotor body.

7. A method comprising:
winding a rectangular wire (110) around a rotor segment (106); and
installing the rotor segment into a rotor body.

8. The method of claim 7, further comprising:
repeating winding and installing for a predetermined number of rotor segments (106) and rectangular wires (110).

9. The method of claim 8, wherein winding includes winding the rectangular wire (110) around the rotor segment (106) such that there is no clearance between the rotor segment and the rectangular wire.

10. A rotor (100), comprising:
a rotor yoke hub (102);
a rotor pole (106) operatively connected to a rotor yoke hub;
a rectangular wire (110) wound around a body of the rotor pole (106) such that there is no clearance between the wire and the rotor pole body and/or such that there is no clearance between layers of the winding.

11. The rotor of claim 10, wherein the rotor pole (106) is joined to the rotor yoke hub (102) via a dove tail joint or a fir tree joint.

12. The rotor of claim 10 or 11, wherein the rotor (100) is formed by a process of
winding a rectangular wire (110) to fit around the pole (106); and
installing the rotor pole into the rotor yoke hub (102) via a joint.

13. The rotor of claim 12, wherein winding includes, winding the rectangular wire (110) to form an aperture (114) and the process further comprising inserting the rotor pole into the aperture.

14. The rotor of claim 13, wherein winding includes winding the rectangular wire (110) directly onto the rotor pole.

15. The rotor of any of claims 12 to 14, wherein the process further includes securing the joint via one or more of laser welding, adhering, or press fitting the rotor pole into the rotor yoke hub.
